# EUROPEAN PATENT APPLICATION

(11) **EP 2 236 774 A2**
(43) Date of publication of application: **06.10.2010**
(21) Application number: 10157870.6
(22) Date of filing: 26.03.2010
(51) Int. Cl.: F01D 25/00, F02C 3/20, F02C 3/30, F02C 9/40

(54) **Additive delivery systems and methods for gas turbines**

(30) Priority: 31.03.2009 US 416010
(71) Applicant: General Electric Company, Schenectady, NY 12345 (US)
(72) Inventor: Symonds, Richard Arthur, Longwood, FL 32750 (US)
(74) Representative: Gray, Thomas

(57) **Abstract**

Methods and systems are provided for delivering an additive (28) to a turbine combustor (12). In one embodiment, a water injection system (22) directs water (24) through a water passage (96) to a turbine combustor (12) at a flow rate that is variable to achieve a first control function. An additive delivery system (27) directs an amount of an additive (28) through the water passage (96) to the combustor (12) to achieve a second control function. The amount of the additive (28) is variable based on the flow rate of the water (24), and the first and second control functions are different from one another.

## Description

### BACKGROUND OF THE INVENTION

The subject matter disclosed herein relates to gas turbine engines, and more specifically, to additive delivery systems for gas turbine engines.

In general, gas turbine engines combust a mixture of compressed air and fuel to produce hot combustion gases. The combustion gases may flow through one or more turbine stages to generate power for a load and/or a compressor. As the demand for energy has increased, gas turbine operators and manufacturers have increasingly explored the use of low-quality fuels, such as residual fuel oil, in gas turbines. However, the low quality fuels may include large amounts of impurities, such as vanadium, that may corrode components of gas turbines.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a combustor configured to combust a fuel, a turbine configured to receive the combusted fuel, and a water injection system configured to direct water at a flow rate through at least one water passage to the combustor. The flow rate is variable to achieve a first control function. The system also includes an additive delivery system configured to direct an amount of an additive through the at least one water passage to the combustor to achieve a second control function. The amount of the additive is variable based on the flow rate of water, and the first and second control functions are different from one another.

In a second embodiment, a system includes an additive delivery system configured to supply an amount of a corrosion inhibiting additive into a flow of water directed to a turbine combustor by a water injection system. The system also includes a controller configured to adjust the amount of the corrosion inhibiting additive based at least in part on the flow of water. The flow of water is variable to achieve a function unrelated to the corrosion inhibiting additive.

In a third embodiment, a method includes controlling an amount of a corrosion inhibiting substance to be added into a water supply of a water injection system of a turbine combustor. A flow rate of the water supply is variable independent from the amount to achieve a non-corrosion inhibiting control function. The amount is variable based at least in part on the flow rate of the water supply to achieve a corrosion inhibiting control function.

### BRIEF DESCRIPTION OF THE DRAWINGS

There follows a detailed description of embodiments of the invention by way of example only with reference to the accompanying drawings, in which:

FIG. 1 is a schematic flow diagram of an embodiment of a gas turbine engine with a water injection system that may be employed to deliver additives;

FIG. 2 is a sectional view of an embodiment of the gas turbine engine of FIG. 1 sectioned through the longitudinal axis;

FIG. 3 is a partial cut away view of a fuel nozzle of a combustor of the gas turbine engine of FIG. 2;

FIG. 4 is a flow chart depicting a method for delivering an additive through an embodiment of the water injection system shown in FIG. 1; and

FIG. 5 is a flow chart depicting a method for delivering an additive to a gas turbine engine employing a water injection additive system and a fuel additive system.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The present disclosure is directed to gas turbine engines with additive delivery systems designed to supply additives through existing passages used for water injection. The existing passages may be used to provide water to the combustor for non-additive purposes, such as emissions control, power augmentation, or turbine soaking. The present embodiments use these existing passages to provide additives to the combustor along with the water, which may reduce manufacturing costs and/or complexities by using existing water passages, rather than employing separate, dedicated additive injection passages or employing the fuel passages for water injection. In certain embodiments, the additives may achieve operational control functions, such as inhibiting corrosion and/or smoke production. For example, additives such as magnesium may be injected into the combustor to inhibit the corrosion that may be caused by impurities contained in low quality fuels. As discussed below, certain of the presently disclosed additive delivery systems may employ water soluble additives, rather than oil-soluble or oil-dispersible additives. The water soluble additives may reduce or eliminate degradation of fuel handling equipment and may be less costly than oil-based additives, particularly for higher concentrations of impurities.

Accordingly, in the present embodiments, additive delivery systems are designed to interface with water injections systems to inject water soluble or water dispersible additives through the existing passages used for water injection. In other words, the additives are injected through existing passages already used to inject water to achieve non-additive control functions, such as emissions control, power augmentation, or turbine soaking, among others. The use of the existing passages allows the additives to be provided to the combustor without using separate, additive dedicated passages. For example, water injection systems may be employed during combustion of liquid and/or gaseous fuels to inject water into the combustor to reduce emissions of compounds, such as nitric oxide and nitrogen dioxide (collectively known as NOx). The water injection systems may direct water from a water supply to separate, water dedicated passages within the fuel nozzles or within the combustor. The water may then enter the combustion zone along with the fuel and air. The additives may be injected into the combustor through the same passages used by the emissions water injection systems. In other examples, water injection systems may be employed to inject water into the combustor for power augmentation or for turbine soaking (e.g., to remove ash). The additives also may be injected through these same passages used to provide water for power augmentation or for turbine soaking.

In certain embodiments, the additives may be mixed with the water to form a solution containing both the water and the additives. The solution may then be injected into the combustor through the existing water passages used to provide water for non-additive purposes. In this manner, the existing water passages may be employed to deliver the additives to the combustor instead of using additive dedicated passages or fuel passages. By delivering the additives through the water passages, which are not in fluid communication with the liquid fuel passages, contamination of the fuel system may be abated or eliminated. Further, the addition of the additives through the existing water passages used by the water injection system allows water soluble additives to be employed, which generally may be less costly than using oil-based additives. Moreover, the additive delivery system provides manufacturing flexibility by allowing existing water injection systems to be modified to incorporate the additive delivery systems. Of course, the additive delivery systems also may be incorporated into water injection systems during initial manufacturing.

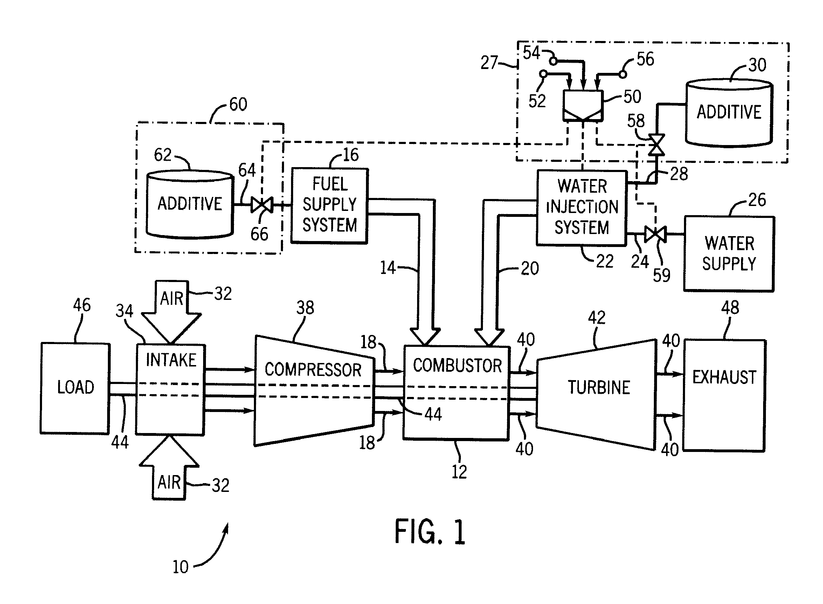

Turning now to the drawings and referring first to FIG. 1, a block diagram of an embodiment of a gas turbine engine 10 is illustrated. The gas turbine engine 10 may be part of a simple cycle system or a combined cycle system. The gas turbine engine 10 includes a combustor 12 that receives fuel 14 from a fuel supply system 16. Fuel supply system 16 may provide a liquid or gaseous fuel 14, such as natural gas, light or heavy distillate oil, naphtha, crude oil, residual oil, or syngas, to the gas turbine engine 10. In certain embodiments, the fuel supply system 16 may be configured for dual-fuel operation to selectively switch between liquid and gaseous fuels while the gas turbine engine 10 is operating under a load. The gaseous fuel and the liquid fuel may be directed to two separate liquid and gas passages within the combustor 12 (e.g., via the fuel nozzle).

Within the combustor 12, the fuel 14 may mix with pressurized air, shown by arrow 18, and ignition may occur, producing hot combustion gases that power the gas turbine engine 10. In addition to receiving fuel 14 and pressurized air 18, the combustor 12 may receive a water solution 20 from a water injection system 22. The water injection system 22 may regulate flow of water 24 from a water supply 26 to the combustor 12. The water injection system 22 may include an integrated package, such as an equipment skid, that houses equipment, such as pumps, flow meters, valves, piping, pressure switches, motors, and the like, configured to regulate the flow of water 24 from the water supply 26 to the combustor 12. The water injection system 22 may supply the solution 20 to the combustor 12 to perform control functions, such as reducing emissions of compounds such as NOx. In other embodiments, the water injection system 22 may supply the solution 20 to the combustor 12 to provide power augmentation. In yet other embodiments, the water injection system 22 may supply the solution 20 to the combustor 12 to provide turbine soaking that wets turbine deposits (e.g. ash) to facilitate removal of the deposits. Within the combustor 12, the solution 20 may flow through water passages that are separate from the liquid and gaseous fuel passages and the air passages.

The water injection system 22 may be fluidly coupled to an additive delivery system 27 to supply additives 28 to the combustor 12. The additive delivery system 27 may supply the additives 28 to the water injection system 22 for delivery to the combustor 12 through the water injection passages. The additive 28 may exist in a liquid, solid, or gaseous form, and may be designed to inhibit corrosion and/or smoke production within the gas turbine engine 10. For example, the additive may include a barium or manganese compound for reducing smoke production. In another example, the additive may be a corrosion inhibiting additive, such as a magnesium based compound that reacts with the vanadium pentoxide or other vanadium compounds present in the combustor (e.g. as combustion products) to inhibit corrosion. The corrosion inhibiting additives may reduce or prevent oxidation, sulfidation, and/or hot corrosion, among others. In certain embodiments, the additive 28 may include a water soluble solution of magnesium sulfate, magnesium chloride, or magnesium nitrate. The additives 28 also may include nickel or calcium, among others. In other embodiments, the additive 28 may include an oil soluble additive, such as a magnesium sulfonate or magnesium salts of an organic acid. Further, other elements and/or compounds, such as silicon, chromium, and chlorine, among others, may be present within the additive 28.

The additives 28 may combine with the water 24 in the water injection system 22 in various types of mixtures. For example, the additives 28 may include particles dispersed, suspended, or dissolved in the water 24. In another example, the additives 28 may exist in an oil-based solution that forms an emulsion with the water 24. In yet another example, the additives 28 may exist in a water-based solution that is diluted by the water 24.

The additive delivery system 27 may include a storage vessel, such as a tank 30, that stores a quantity of the additive 28 to be supplied to the water injection system 22. In certain embodiments, the tank 30 may store approximately 100 to 200 gallons of a concentrated water-based additive solution. However, in other embodiments, the tank may store any amount of an additive solution based on factors such as, the size of the gas turbine, the quantity of additive desired, and the strength of the additive desired, among others. In other embodiments, the tank 30 may store the additive in a powder form. The water injection system 22 may receive the additive 28 through piping or similar equipment and may mix the water 24 and the additive 28 together to form the solution 20 containing the water 24 and the additive 28. In certain embodiments, the solution 20 may include a homogenous mixture of the water 24 and the additive 28. However, in other embodiments, the solution 20 may include a heterogeneous mixture and/or a dual stream flow with the water 24 and the additive 28 existing as separate streams. Regardless of the type of mixture, the solution 20 may then be supplied to the combustor 12 by the water injection system 22. As shown, the tank 30 is located upstream of the water injection system 22 so the additive 28 may be mixed with the water 24 in the water injection system 22. However, in other embodiments, the tank 30 may be located downstream of the water injection system 22, and the water 24 may be mixed with the additive 28 after exiting the water injection system 22. Moreover, in other embodiments, the tank 30 may be connected to the water supply 26 or to a separate water supply to receive water for preparing a solution of the additive 28 in the tank 30 and/or for varying the concentration of the additive 28 in the tank 30.

Upon reaching the combustor 12, the solution 20 may be introduced into the combustion zone through water passages within fuel nozzles for the combustor 12 or within the combustor 12, itself. For example, the solution 20 may enter the combustor 12 through dedicated water passages within a fuel nozzle for the combustor 12. The solution 20 also may enter the combustor 12 through nozzles mounted to the cold side of the fuel nozzle, through nozzles mounted to the end cover of the combustor 12, through secondary fuel nozzles mounted on the end cover of the combustor 12 downstream of the primary fuel nozzles, or through water passages within the transition section downstream of the combustor 12 (e.g. injected into the flow stream, crosswise or at various angles with respect to the flow).

Within the combustor 12, the pressurized air 18 may combust with the fuel 14 to produce hot combustion gases 40. The pressurized air 18 may include intake air 32 that enters the gas turbine system 10 through an air intake section 34 and flows through a compressor 38. The pressurized air 18 may enter the combustor 12 where the pressurized air may mix and combust with the fuel 14 to produce hot combustion gases 40. The solution 20 may be directed into the combustion zone with the fuel 14 where the water 24 may reduce emissions and the additive 28 may inhibit corrosion. From the combustor 12, the hot combustion gases 40 may flow through the turbine 42 driving the compressor 38 via a shaft 44. For example, the combustion gases 40 may apply motive forces to turbine rotor blades within the turbine 42 to rotate the shaft 44. After flowing thorough the turbine 42, the hot combustion gases may exit the gas turbine system 10 through an exhaust section 48.

The operation of the additive delivery system 27 may be governed by a controller 50. The controller 50 may receive input from sensors 52, 54, and 56 to determine the level of additive 28 to supply to the combustor 12. The sensors 52 and 54 may sense properties of the fuel 14 entering the combustor 12. Specifically, the sensor 52 may sense the fuel flow rate, and the sensor 54 may sense the amount of an element, such as vanadium, in the fuel. The sensor 56 may sense the flow rate of the water 24 entering the water injection system 22.

The controller 50 may be operably coupled to a valve 58 to regulate the amount of the additive 28 entering the water injection system 22 from the tank 30 based on input from the sensors 52, 54, and 56. For example, the controller 50 may execute hardware or software control algorithms to maintain a constant ratio between the amount of additive 28 entering the combustor 20 and the amount of fuel 14 entering the combustor 20. Based on the fuel flow rate received through sensor 52, the controller 50 may vary the flow rate through valve 58 to maintain a specific ratio of fuel 14 to additive 28 that enters the combustor 12.

The controller 50 also may use the flow rate of the water 24 received through sensor 56 to vary the flow rate of the additive 28 entering the water injection system 22. The flow rate of the water 24 entering the water injection system 22 may be varied to achieve a non-additive related control function, such as emissions control, power augmentation, or turbine soaking, among others. The controller 50 may receive the set water flow rate from sensor 56 and may vary the amount of additive 28 entering the water injection system 22 based on the water flow rate. The controller 50 may account for the water flow rate and may maintain a constant ratio between a compound or an element in the fuel 14 and the additive 28. For example, the controller 50 may regulate valve 58 to provide approximately a 3:1 ratio between a magnesium based additive 28 and the amount of vanadium in the fuel 14. In this example, the sensor 54 may sense the amount of vanadium in the fuel 14 and provide this information to the controller 50. The controller may use the information to vary the flow rate of the additive 28 to maintain a predetermined ratio between the additive and an element or compound in the fuel. In certain embodiments, the controller 50 may maintain a predetermined ratio in the combustor 12 between a corrosion inhibiting additive and a corrosive element in the fuel. The predetermined ratio may vary depending on the corrosion inhibiting additive and the corrosive element. For example, in certain embodiments, the ratio may be approximately 1:1, 2:1, 3:1, 4:1, or 5:1. However, in other embodiments, any suitable ratio may be employed.

In other embodiments, the additive flow rate may be regulated based on other compounds or elements in the fuel 14. Further, in certain embodiments, the amount of an element or compound in the fuel 14 may be input, for example by a user, into the controller 50 and sensor 54 may not be employed. However, the controller 50 may receive the water flow rate through sensor 56 and account for the water flow rate when varying the amount of additive 28 entering the water injection system 22.

According to exemplary embodiments, the control circuitry may include components such as an analog to digital converter, a microprocessor, a non volatile memory, and an interface board. Other devices may, of course, be included in the system, such as additional pressure and/or temperature transducers or switches that sense temperatures and pressures of the solution 20 and/or the fuel 14. Moreover, in other embodiments, the controller 50 may regulate valve 58 using other operational parameters to control the ratio of the additive 28 and the fuel 14. For example, the controller 50 may use operational parameters such as torque, exhaust emissions, or power output, among others, to indicate the amount of the additive 28 that should be applied to the combustor 12. Further, in certain embodiments, the controller 50 may independently control the supply of two or more different additives to the water injection system 22. For example, multiple valves and piping configurations may be included in parallel with valve 58 to regulate the flow of different additives entering the water injection system 22. The controller 50 may independently regulate the amount of each additive entering the water injection system 22. For example, the additive 28 may be regulated based on the amount of a corrosive element in the fuel while another additive is regulated based on another operating parameter of the turbine engine 10.

The controller 50 also may govern operation of the water injection system 22. For example, in certain embodiments, the water 24 may be supplied to the combustor 12 when the gas turbine engine 10 is operating on liquid fuel 14. However, the additive delivery system 27 may be configured to deliver additive 28 to the combustor 12 when the combustor 12 is operating on either liquid or gaseous fuel 14. In these embodiments, the controller 50 may be operably coupled to a valve 59 that regulates flow of water 24 to the water injection system 22 from the water supply 26. When the gas turbine engine 10 is operating on gaseous fuel, the controller 50 may enable the water injection system 22 to provide water 24 to form the solution 20 that delivers the additive 28 to the combustor 12. In these embodiments, low flow rates of the water may be employed by regulating the valve 66 through the controller 50. In other words, even though the water 24 may not be employed to perform a non-additive function, such as emissions control within the combustor 12, a certain amount of the water 24 still may be provided to maintain the desired level of additive 28 within the combustor 12.

In other embodiments, the controller 50 may control the flow of the water 24 within the water injection system 22, and the separate valve 59 may be omitted. Further, in certain embodiments, the additive delivery system 27 may be integrated into the water injection system 22. However, in other embodiments, particularly those that modify an existing water injection system 22, the additive delivery system 27 may exist as a standalone component. Further, additional equipments, such as pumps, drives, flow meters, pressure and temperature transducers, and controllers may be included within the additive delivery system 27.

In addition to the water-based additive delivery system 27, the gas turbine engine 10 may include an optional oil-based additive delivery system 60. The oil-based system 60 includes an additive supply 62 that directs an oil-based additive 64 through a valve 66 to the fuel supply system 16. The oil-based additive 64 may include an oil soluble additive, such as magnesium sulfonates, magnesium salts of organic acid, such as higher molecular weight, aliphatics, naphthenics, and petroleum sulfonic acids, including magnesium petroleum sulfonates and magnesium naphthenates, among others, that is designed to inhibit corrosion. However, in other embodiments, the oil-based additive 64 may include a particulate or powder suspension, dispersion, or emulsion.

The oil-based additive system 60 may be employed for fuels 14 containing relatively low levels of corrosive elements or compounds. For example, when using fuels containing approximately 0 to 30 parts per million of vanadium, it may be more cost effective to employ an oil-based additive 64 to inhibit corrosion instead of a water soluble additive 28. More specifically, an oil-based additive 64 may be employed when using fuels containing approximately 5 to 15 parts per million of vanadium, and all subranges therebetween. In these embodiments, the sensor 54 may sense the amount of vanadium in the fuel 14 and provide the amount to the controller 50. When the level is below a certain threshold, for example, 10, 11, 12, 13, 14, 15, 16, 17, 18, 19, or 20 parts per million, the controller 50 may close valve 58 and open valve 66 to direct the oil based additive 64 to the fuel supply system 16. When the level of vanadium increases, for example, exceeding approximately 5, 6, 7, 8, 9, 10, 11, 12, 13, 14, or 15 parts per million, the controller 50 may close valve 66 and open valve 58 to operate the water-based additive delivery system 27.

In certain embodiments, the controller 50 also may be configured to disable both the water-based additive delivery system 27 and the oil-based additive delivery system 60. For example, when the sensor 54 senses a level of vanadium less than approximately 1, 2, or 3 parts per million, the controller 50 may disable both additive delivery systems 27 and 60. The controller 50 also may govern operation of other equipment, such as pumps and drives within the systems 27, 60, and 22, in addition to the valves 58, 59, and 66.

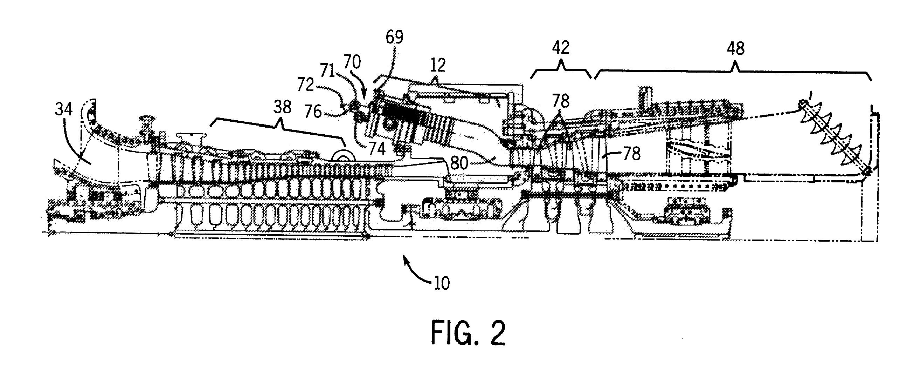

FIG. 2 is a cross sectional side view of an embodiment of the gas turbine engine 10 of FIG. 1. The gas turbine engine 10 includes a fuel nozzle 70 located at a head end 69 of the combustor 12. In certain embodiments, the gas turbine engine 10 may include multiple combustors 12 disposed in an annular arrangement. The fuel nozzle 70 receives liquid fuel 14 (FIG. 1) from a liquid fuel connection 72 and gaseous fuel 14 (FIG. 1) from a gaseous fuel connection 74. The fuel connections 72 and 74 may be coupled to the fuel supply system 16 (FIG. 1) to receive the fuel 14. In addition to the fuel 14, the fuel nozzle 70 may receive the water solution 20 (FIG. 1) through a water injection connection 76 that is coupled to the water injection system 22 (FIG. 1). However, in other embodiments, the water solution 20 may be supplied to the combustor through nozzles at other locations, such as through nozzles mounted to the cold side of the fuel nozzle, through nozzles mounted to the end cover of the combustor 12, through secondary fuel nozzles mounted to the end cover of the combustor 12 downstream of the primary fuel nozzles, or through water passages within the transition section 80 downstream of the combustor 12.

As described above with respect to FIG. 1, air may enter the system 10 through the intake section 34 and be compressed by the compressor 38. The compressed air from the compressor 38 may then be directed into the combustor 12. In certain embodiments, a portion of the compressed air may undergo further processing, such as additional compression and/or cooling, and be directed to the combustor 12 as atomizing air through an atomizing air connection 71. Within the combustor 12, the air may be mixed with the fuel 14 entering the combustor 12 through the fuel connections 72 and 74. In certain embodiments, the fuel nozzle 70 may inject a fuel mixture into the combustor 12 in a suitable ratio for optimal combustion, emissions, fuel consumption, and power output. When fuel is injected through either connection 72 or 74, the solution 20 may be supplied to the combustor 12 through the water injection connection 76 to provide corrosion inhibiting additives. As combustion occurs within the combustor 12 to produce hot combustion gases, the water solution 20 may be injected into the combustor 12 to reduce emissions, inhibit corrosion, and/or inhibit smoke production.

The combustion gases may exit the combustor 12 to a transition section 80 and flow through the transition section 80 to the turbine 42. Within the turbine 42, the combustion gases may turn blades 78 that extend radially within the turbine 42 to rotate the shaft 44 (FIG. 1) before exiting through the exhaust section 48.

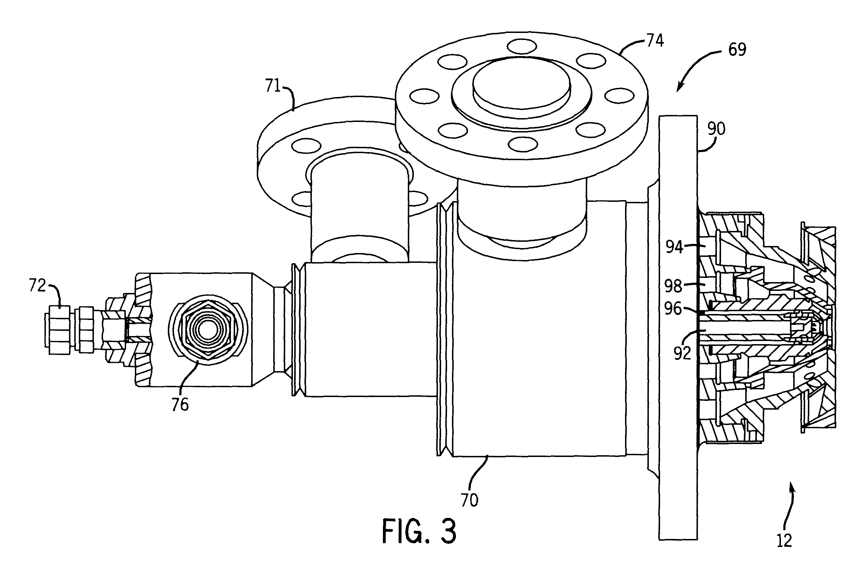

FIG. 3 shows a cut away view of an embodiment of a fuel nozzle of the combustor 12. The fuel nozzle 70 is mounted to a flange 90 that may mount the fuel nozzle 70 to the head end 69 of the combustor 12. The flange 90 may be fluidly coupled to the connections 72, 74, and 76 and may include conduits or channels that route the atomizing air, the fuel 14, and the water solution 20 (FIG. 1) through the fuel nozzle 70 and into the combustor 12. The liquid fuel may flow through a liquid passage 92 and the gaseous fuel may flow through a gaseous passage 94. As described above with respect to FIG. 1, the combustor 12 may be configured to receive both gaseous and liquid fuels. The water solution 20 that contains the additive 28 and the water 24 may flow through a water passage 96 and be expelled along with the fuel 14 into the combustor 12. The atomizing air may enter the combustor 12 through an atomizing air passage 98, which is designed to atomize the liquid fuel. As shown in FIG. 3, the liquid passage 92, the gaseous passage 94, the water passage 96, and the air passage 98 are coaxially located within the fuel nozzle 70. However, in other embodiments, the locations, sizes, and shapes of the passages 92, 94, 96, and 98 may vary. For example, the passages 92, 94, 96, and 98 may not be coaxial. In another example, there may be multiple, axially staged injection points for fuel and/or water. Further, in certain embodiments, one or all of the passages 92, 94, 96, and 98 may include multiple independent circuits. Moreover, although a single fuel nozzle design is illustrated, the additive delivery system may also be employed in combustors with multiple fuel nozzles, in combustors configured to receive multiple fuel types, in combustors with multiple stages of combustion, and/or in systems that include multiple combustors and/or multiple combustion reaction stages.

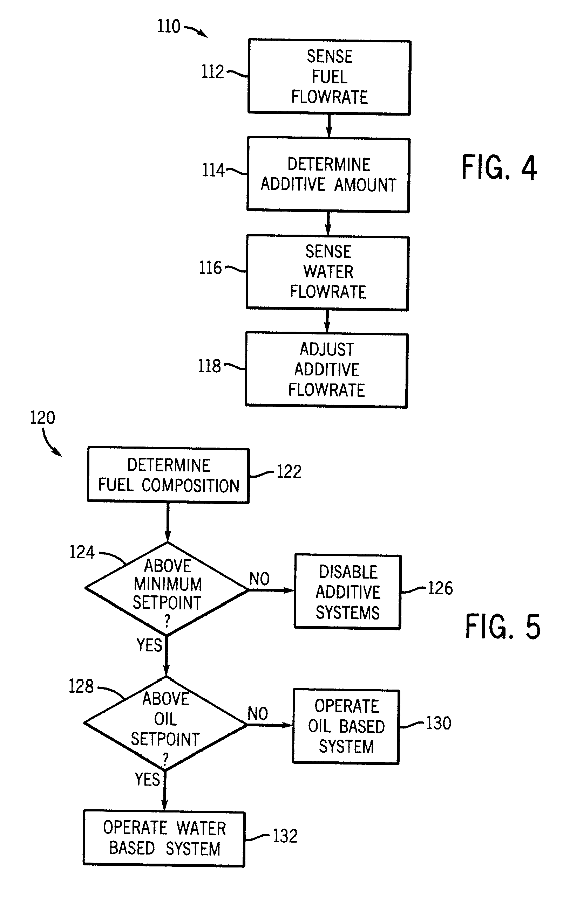

FIG. 4 depicts an exemplary method 110 for delivering additive to a combustor. The method may begin by sensing (block 112) a fuel flow rate. For example, a sensor 52 (FIG. 1) may sense the flow rate of the fuel 14 entering the combustor 12. Using the fuel flow rate, the controller 50 (FIG. 1) may determine (block 114) the amount of additive to supply to the combustor 12 (FIG. 1). For example, the controller 50 may be configured to supply a set amount of additive based on the fuel flow rate or on the amount of an element or compound contained in the fuel 14. For example, in certain embodiments, approximately three parts of a magnesium based additive may be supplied for every part of vanadium within the fuel. In other embodiments, the amount of additive may be controlled based on the presence of other corrosive elements or compounds within the fuel 14. As described above with respect to FIG. 1, the amount of an element or compound within the fuel 14 may be determined using a sensor, such as the sensor 54 shown in FIG. 1.

After the controller 50 determines the amount of additive, the controller 50 may sense the water flow rate (block 116), for example using the sensor 56 (FIG. 1). Based on the water flow rate and the fuel flow rate, the controller 50 may determine a target additive flow rate. Because the additive delivery system is designed to use the water injection system to transmit additive to the combustor, the controller 50 may determine the additive flow rate based on the water flow rate currently used by the water injection system. The water flow rate may be set to achieve a non-additive control function, such as emissions control, power augmentation, or turbine soaking. In order to reduce disruption to the non-additive control function, the controller 50 may adjust the additive flow rate based on the existing water flow rate. The controller 50 may then adjust (block 118) the additive flow rate until the additive flow rate reaches the target flow rate. For example, the controller 50 may adjust the additive flow rate by opening or closing the valve 58 (FIG. 1). The additive flow rate may be adjusted based on the water flow rate to provide the desired level of additive. In certain embodiments, the controller 50 may regulate the additive flow rate to the target flow rate until a change in the fuel flow rate is sensed. In other embodiments, the controller 50 also may regulate the flow of water to an additive supply, for example, tank 30 shown in FIG. 1, to adjust the concentration of the additive entering the water injection system. The controller 50 may regulate the flow of the water to the additive tank 30 from water supply 26 (FIG. 1), or from an independent water supply (not shown). For example, when no water or a relatively low amount of water is desired to achieve a non-additive control function, the controller 50 may vary the amount of water entering tank 30 to adjust the additive flow rate. The method may then begin again by sensing (block 112) the fuel flow rate.

In certain embodiments, the controller 50 may selectively enable the water based additive delivery system 27 (FIG. 1) and the oil-based additive delivery system 60 (FIG. 1) FIG. 5 depicts an exemplary method 120 for switching between a water-based additive delivery system 27 and an oil-based additive delivery system 60. The method 120 may begin by determining (block 122) the composition of the fuel 14. For example, the sensor 54 (FIG. 1) may sense the amount of a compound or an element, such as vanadium, in the fuel 14 and provide the information to the controller 50. In other embodiments, the fuel composition may be input to the controller 50 by another control system or by a user. The controller 50 may then determine (block 124) whether the fuel composition is above a minimum set point. For example, in certain embodiments, the set point may be approximately 1-2 parts per million of vanadium within the fuel 14. If the fuel composition is below or at the minimum set point, the controller 50 may disable (block 126) the additive systems. For example, as shown in FIG. 1, the controller 50 may close valves 58 and 66 to disable both the oil-based system 60 and the water-based system 27.

If the fuel composition is above the minimum set point, the controller 50 may then determine (block 128) whether the fuel composition is above an oil-based additive set point. For example, in certain embodiments, the oil-based set point may be approximately 3, 4, or 5 parts per million of vanadium. If the fuel composition is below or at the set point, the controller may operate (block 130) the oil-based additive system 60 (FIG. 1). For example, the controller 50 may open valve 66 to supply additive 62 to the fuel supply system 16. The controller 50 also may close valve 58 to shut off the supply of additive 28 to the water injection system 22. However, if the level of vanadium is above the oil-based set point, the controller may operate (block 132) the water-based additive system 27 (FIG. 1). For example, the controller 50 may close valve 66 and open valve 58 to supply water-based additive 28 to the water injection system 22. As may be appreciated, the operation of the oil-based and water based additive delivery systems 60 and 27 may be governed using a variety of control algorithms and control devices. For example, in certain embodiments, the controller 50 may enable and disable various equipment, such as pumps, valves, meters, drives, and sensors, among others, to enable and disable each of the systems 60 and 27. Further, the set points are provided by way of example only and are not intended to be limiting. The minimum set points and oil based set points may be based on various components of the fuel and may include various values and ranges. Moreover, in certain embodiments, the set points may be based on multiple components within the fuel 14.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system, comprising:
   a combustor configured to combust a fuel;
   a turbine configured to receive the combusted fuel;
   a water injection system configured to direct water at a flow rate through at least one water passage to the combustor, wherein the flow rate is variable to achieve a first control function; and
   an additive delivery system configured to direct an amount of an additive through the at least one water passage to the combustor to achieve a second control function, wherein the amount is variable based on the flow rate of water, and the first and second control functions are different from one another.
2. The system of clause 1, wherein the water injection system is configured to achieve at least one of emissions control, power augmentation, or turbine soaking as the first control function.
3. The system of clause 1, wherein the additive delivery systems comprises a corrosion inhibiting additive delivery system configured to achieve corrosion inhibition as the second control function.
4. The system of clause 1, wherein the additive delivery system comprises a smoke inhibiting additive delivery system configured to achieve smoke inhibition as the second control function.
5. The system of clause 1, wherein the combustor comprises at least one fuel nozzle comprising:
   at least one fuel passage configured to direct the fuel through the fuel nozzle; and
   the at least one water passage, wherein the at least one water passage is separated from the at least one fuel passage.
6. The system of clause 1, wherein the water injection system is configured to operate independently from the additive delivery system to achieve the first function, and wherein the additive delivery system is configured to operate dependently on the flow rate determined by the water injection system to achieve the second function.
7. The system of clause 1, comprising a fuel supply system configured to switch the fuel from a gaseous fuel to a liquid fuel during system operation.
8. A system, comprising:
   an additive delivery system configured to supply an amount of a corrosion inhibiting additive into a flow of water directed to a turbine combustor by a water injection system; and
   a controller configured to adjust the amount of the corrosion inhibiting additive based at least in part on the flow of water, wherein the flow of water is variable to achieve a function unrelated to the corrosion inhibiting additive.
9. The system of clause 8, comprising a tank configured to store the corrosion inhibiting additive.
10. The system of clause 9, wherein the tank is configured to store a water-based solution of the corrosion inhibiting additive.
11. The system of clause 9, comprising a valve configured to regulate flow of the corrosion inhibiting additive from the tank.
12. The system of clause 8, comprising a controller configured to vary a flow of the corrosion inhibiting additive based on a parameter of a fuel entering the turbine combustor.
13. The system of clause 12, comprising at least one sensor configured to sense the parameter, wherein the parameter comprises at least one of a flow rate of the fuel or an elemental composition of the fuel.
14. The system of clause 12, wherein the controller is configured maintain a predetermined ratio in the turbine combustor between the corrosion inhibiting additive and a corrosive element in the fuel.
15. The system of clause 12, wherein the controller is configured to selectively enable the additive delivery system and an oil-based additive system configured to add an oil-based additive to the fuel entering the turbine combustor.
16. The system of clause 12, wherein the controller is configured to regulate flow of the water to the water injection system.
17. A method, comprising controlling an amount of a corrosion inhibiting substance to be added into a water supply of a water injection system of a turbine combustor, wherein a flow rate of the water supply is variable independent from the amount to achieve a non-corrosion inhibiting control function, and the amount is variable based at least in part on the flow rate of the water supply to achieve a corrosion inhibiting control function.
18. The method of clause 17, comprising:
   sensing a fuel flow rate of a fuel entering the turbine combustor; and
   regulating the amount of the corrosion inhibiting additive based on the fuel flow rate.
19. The method of clause 17, comprising controlling the flow rate of the water supply to achieve at least one of emissions control, power augmentation, or turbine soaking as the non-corrosion inhibiting control function.
20. The method of clause 17, comprising:
   determining an amount of a corrosive element in a fuel entering the turbine combustor; and
   selectively supplying the corrosion inhibiting additive to the turbine combustor and an oil-based additive to the turbine combustor based on the amount.

## Claims

1. A system, comprising:
a combustor (12) configured to combust a fuel (14);
a turbine (42) configured to receive the combusted fuel;
a water injection system (22) configured to direct water (24) at a flow rate through at least one water passage (96) to the combustor (12), wherein the flow rate is variable to achieve a first control function; and
an additive delivery system (27) configured to direct an amount of an additive (30) through the at least one water passage (96) to the combustor (12) to achieve a second control function, wherein the amount is variable based on the flow rate of water, and the first and second control functions are different from one another.

2. The system of claim 1, wherein the water injection system (22) is configured to achieve at least one of emissions control, power augmentation, or turbine soaking as the first control function.

3. The system of claim 1 or 2, wherein the additive delivery systems (27) comprises a corrosion inhibiting additive delivery system configured to achieve corrosion inhibition as the second control function.

4. The system of any one of the preceding claims, wherein the additive delivery system (27) comprises a smoke inhibiting additive delivery system configured to achieve smoke inhibition as the second control function.

5. The system of any one of the preceding claims, wherein the combustor (12) comprises at least one fuel nozzle (70) comprising:
at least one fuel passage (92, 94) configured to direct the fuel (14) through the fuel nozzle (70); and
the at least one water passage (96), wherein the at least one water passage (96) is separated from the at least one fuel passage (92, 94).

6. The system of any one of the preceding claims, wherein the water injection system (22) is configured to operate independently from the additive delivery system (27) to achieve the first function, and wherein the additive delivery system (27) is configured to operate dependently on the flow rate determined by the water injection system (22) to achieve the second function.

7. The system of any one of the preceding claims, comprising a fuel supply system (16) configured to switch the fuel (14) from a gaseous fuel to a liquid fuel during system operation.

8. A system, comprising:
an additive delivery system configured to supply an amount of a corrosion inhibiting additive into a flow of water directed to a turbine combustor by a water injection system; and
a controller configured to adjust the amount of the corrosion inhibiting additive based at least in part on the flow of water, wherein the flow of water is variable to achieve a function unrelated to the corrosion inhibiting additive.

9. The system of claim 8, comprising a tank configured to store the corrosion inhibiting additive.

10. The system of claim 9, wherein the tank is configured to store a water-based solution of the corrosion inhibiting additive.

11. The system of claim 9, comprising a valve configured to regulate flow of the corrosion inhibiting additive from the tank.

12. A method, comprising controlling (118) an amount of a corrosion inhibiting substance (28) to be added into a water supply (26) of a water injection system (22) of a turbine combustor, wherein a flow rate of the water supply is variable independent from the amount to achieve a non-corrosion inhibiting control function, and the amount is variable based at least in part on the flow rate of the water supply (26) to achieve a corrosion inhibiting control function.

13. The method of claim 12, comprising:
sensing (112) a fuel flow rate of a fuel (14) entering the turbine combustor (12);
and
regulating (118) the amount of the corrosion inhibiting additive based on the fuel flow rate.

14. The method of claim 12 or 13, comprising:
determining (122) an amount of a corrosive element in a fuel (14) entering the turbine combustor (122); and
selectively supplying (124, 128) the corrosion inhibiting additive (28) to the turbine combustor (12) and an oil-based additive to the turbine combustor based on the amount.

15. The method of claim 12, comprising controlling the flow rate of the water supply to achieve at least one of emissions control, power augmentation, or turbine soaking as the non-corrosion inhibiting control function.
